# EUROPÄISCHE PATENTSCHRIFT

(11) **EP 1 580 878 B1**
(45) Veröffentlichungstag und Bekanntmachung des Hinweises auf die Patenterteilung: **05.10.2005**
(21) Anmeldenummer: 04002181.8
(22) Anmeldetag: 30.01.2004
(51) Int. Cl.: H02P 7/54, H02P 7/56

(54) **Stromversorgungsschaltung für einen Drehstrom-Asynchronmotor**
Power supply circuit for a three-phase induction motor
Circuit d'alimentation pour un moteur d'induction triphasé

(30) Priorität: 24.09.2003 DE 20314865 U
(43) Veröffentlichungstag der Anmeldung: 28.09.2005
(73) Patentinhaber: Jakob, Karl, Dipl.-Ing. Dr. h.c., 85598 Baldham (DE)
(72) Erfinder: Jakob, Karl, Dipl.-Ing. Dr. h.c., 85598 Baldham (DE)
(74) Vertreter: Körner, Ekkehard

(56) Entgegenhaltungen:
- DE-A- 4 018 146
- DE-A- 4 308 836
- DE-U- 20 104 721
- GB-A- 204 019

## Beschreibung

Die Erfindung bezieht sich auf eine einen Drehstrom-Trenntransformator und eine Schaltereinrichtung enthaltende Stromversorgungsschaltung für einen Drehstrom-Asynchronmotor. Eine solche Stromversorgungsschaltung ist aus DE 201 04 721 U1 bekannt.

Der Betrieb eines Drehstrom-Asynchronmotors erfordert häufig die Herabsetzung der Drehzahl, um die Leistungsabgabe des Motors an den jeweiligen Bedarf anzupassen. Typische Beispiele sind Ventilatoren in Klimageräten, insbesondere bei Kühlhäusern, die in Zeiten schwacher Begehung, wie während Nacht- und Wochenendzeiten, eine geringere Leistung der Rückkühler benötigen.

Eine Lösung, die zugleich aber auch die aufwendigste ist, besteht darin, die Frequenz der Versorgungsspannung, die zum Betrieb des Drehstrommotors verwendet wird, zu verändern. So beschreibt die DE 43 08 836 A1 ein Verfahren zum Betrieb eines Drehfeldmotors mit einem Stromrichter veränderlicher Frequenz und Spannung, das besonders im Bereich der Industrie- und Traktionsantriebe eingesetzt werden soll, wo über einen sehr großen Drehzahlstellbereich eine konstante Leistung verlangt wird, wie beispielsweise bei Haspelantrieben für Walzeinrichtungen. Dazu wird der Drehfeldmotor in einem unteren Drehzahlstellbereich bei konstanter Leistung und relativ hohem Moment in Sternschaltung und in einem oberen Drehzahistellbereich bei konstanter Leistung und relativ niedrigem Moment in Dreieckschaltung betrieben. Als Alternative ist auch angegeben, als Drehfeldmotor einen solchen mit polumschaltbarer Wicklung zu verwenden und in einem unteren Drehzahlstellbereich - wieder bei konstanter Leistung und relativ hohem Moment - mit relativ großer Polpaarzahl und in einem oberen Drehzahlstellbereich - wieder bei konstanter Leistung und mit relativ niedrigem Moment - mit relativ kleiner Polpaarzahl zu betreiben. Als weitere Alternative wird in der Druckschrift auch ein Drehfeldmotor mit zwei Sternwicklungen vorgestellt, die über eigene Stromrichter veränderbarer Frequenz versorgt werden und die je nach Drehzahlbereich parallel oder in Serie geschaltet werden können. Dieser Aufwand ist speziell für den Antrieb von Ventilatoren unnütz, da jene eine von der Drehzahl abhängige Antriebsleistung erfordern.

Bekannt sind auch Phasenanschnitt-Steuerschaltungen, die die dem Drehstrommotor zugeführte Effektivspannung herabsetzen. Phasenanschnittsteuerungen haben den Nachteil, daß sie die Versorgungsspannung des Drehstrommotors stark oberwellenhaltig machen, was Störungen in der Umgebung verursacht. Außerdem rufen sie eine erhebliche Geräuschentwicklung an den Drehstrommotoren durch starkes Brummen hervor. Als weitere Möglichkeit kommt der Einsatz von Transformatoren mit einer entsprechenden Vielzahl von Anzapfungen an den Wicklungen in Betracht, an denen unterschiedlich große Spannungen zur Versorgung des Drehstrommotors abgegriffen werden können. Der Nachteil solcher Transformatoren ist, daß ihr Einsatz mit relativ hohen Verlusten verbunden ist. Eine weitere, insbesondere beim Anfahren eines Drehstrommotors verwendete Maßnahme ist die Umschaltung der Motorwicklungen zwischen Sternschaltung und Dreieckschaltung, mit der aber nur zwei unterschiedliche Drehzahlen erreichbar sind.

Aus der EP 0 865 147 B1 ist eine Lösung bekannt, gemäß der die Wicklungen des Drehstrommotors jeweils bifilar ausgeführt sind, wobei jede Teilwicklung für die volle Spannung Phase gegen Phase ausgelegt ist. Dem Drehstrommotor ist eine Schaltereinrichtung zugeordnet, mit deren Hilfe die Teilwicklungen wahlweise parallel in Dreieckschaltung, in Serie in Dreieckschaltung, parallel in Sternschaltung, in Serie in Sternschaltung sowie drei Teilwicklungen in Dreieck mit den übrigen Teilwicklungen in Stern geschaltet werden können, wodurch ohne weitere Hilfsmittel fünf verschiedene Drehzahlen erreichbar sind, bei denen jeweils alle Teilwicklungen stromdurchflossen sind. Der Motor ist stets mit sinusförmigen Spannungen betrieben und neigt daher nicht zum Brummen. Nachteilig ist, daß der Motor von vornherein für diese Verwendungsart dimensioniert werden muß und nur ganz bestimmte Drehzahlen erreichbar sind, weil zur Vermeidung von Ausgleichsströmen die auf jedem Pol befindlichen Teilwicklungen jeweils gleich ausgeführt werden müssen.

Aus der EP 1 341 295 A1 ist eine Stromversorgungsschaltung für einen Drehstrommotor bekannt, die zwei Drehstrom-Spartransformatoren unterschiedlicher Leistung enthält, die auf einem gemeinsamen Kern vereinigt sind und deren Wicklungen jeweils wenigstens eine Anzapfung haben. Zu der Stromversorgungsschaltung gehört weiterhin eine Schaltereinrichtung, die die Drehstrom-Spartransformatoren wahlweise wirksam macht. Mit dieser Schaltung können beliebige Drehzahlen, die der Motor erreichen soll, eingerichtet werden, an dem Motor brauchen keinerlei Modifikationen vorgenommen werden, und er ist stets mit sinusförmigen Spannungen betrieben, weshalb der Motor keine Brummgeräusche abgibt. Nachteilig an der zuletzt genannten Schaltung ist aber ein noch immer beachtlicher Verlust in dem jeweils wirksamen Transformator, da dieser immer an voller Netzspannung liegt, sowie ein hoher Aufwand an Schaltern und deren Ansteuerung.

Aus der eingangs genannten DE 201 04 721 U1 ist durch den Anmelder eine Stromversorgungsschaltung für einen Drehstrom-Asynchronmotor bekannt geworden, die besonders für einen Antrieb mit quadratischer Drehmomentkurve geeignet ist, also für den schon erwähnten Einsatzfall, der bei Ventilatoren gegeben ist. Die Schaltung enthält einen Drehstrom-Trenntransformator, dessen Primärwicklungen zusätzlich zu einer Grundwicklung für den Volllastbetrieb jeweils eine Zusatzwicklung von etwa 25% der Windungszahl der Grundwicklung aufweisen, wobei Grundwicklung und Zusatzwicklung jeweils in Reihe geschaltet sind. Die Sekundärwicklungen bestehen jeweils aus vier gleichen, jeweils in Reihe geschalteten Teilwicklungen, die zusammen jeweils für die Übertragung der Transformator-Nennleistung ausgelegt sind. Die Primärwicklungen werden wahlweise mit oder ohne Einschluss der Zusatzwicklungen in Stern oder Dreieck geschaltet, und in Sternschaltung wird die Netzspannung wahlweise an die Verbindungspunkte der Grund- und der Zusatzwicklungen oder an die freien Enden der Zusatzwicklungen angelegt. Auch auf der Sekundärseite des Transformators können die Teilwicklungen in Stern und Dreieck geschaltet werden, und es können dabei einige oder alle Teilwicklungen in die Versorgung des Drehstrommotors einbezogen werden. Auf diese Weise lassen sich den Wicklungen des Drehstrommotors, an denen selbst nichts verändert wird, viele unterschiedliche Spannungen zuführen, doch ist ein sehr aufwendiger Schaltermechanismus zur Einrichtung der vielen unterschiedlichen Schaltungszustände erforderlich.

Am elegantesten wäre die Stellung an stufenlos einstellbaren Transformatoren, doch kann dort die Stromabnahme nicht sicher gelöst werden. Die Abnehmerrollen haben einen relativ kleinen Flächenkontakt auf den runden Drähten der Transformatorwicklung und können daher die hohen Ströme nicht schadlos überleiten. Es kommt zu lokalen Überhitzungen, die zu Schmorverbrennungen an Wicklungsdrähten und Stromabnehmern führen.

Die Erfindung möchte hingegen vorhandene Drehstrommotoren für Lastfälle mit über der Drehzahl quadratisch verlaufendem Drehmoment einsetzbar machen, ohne daß an den Motoren etwas geändert werden muß. Ihr liegt die Aufgabe zugrunde, eine Stromversorgungsschaltung anzugeben, mit deren Hilfe mehrere Drehzahlen bei einem Drehstrommotor erreichbar sind, ohne daß große Zusatzverluste hingenommen werden müssen.

Diese Aufgabe wird durch die in Anspruch angegebenen Merkmale gelöst.

Die Stromversorgungsschaltung der Erfindung verwendet einen echten Drehstrom-Trenntransformator, der wahlweise wirksam gemacht oder umgangen wird und dessen Primärseite so dimensioniert ist, daß sie wahlweise in Dreieckschaltung und in Sternschaltung an das Stromnetz anschließbar ist, und dessen Sekundärseite derart dimensioniert ist, daß die von ihr abgegebene Spannung in Sternschaltung zwischen den Spannungen Phase gegen Phase und Phase gegen Null der vollen Netzspannung liegt. Diese genannte, von der Sekundärseite des Transformators abgegebene Spannung hat beispielsweise in einem Drehstromnetz mit einer Spannung Phase gegen Null von 230 V eine Größe von etwa 315 V. Die Erfindung nutzt weiterhin die Umschaltbarkeit der Wicklungen des Drehstrommotors aus, die wahlweise in Dreieck- und in Sternkonfiguration geschaltet werden.

Mit Hilfe von drei Stern/Dreieck-Schaltern und zwei dreipoligen Umschaltern lassen sich dann insgesamt Schaltungskonfigurationen einstellen, die die Wicklungen des Motors mit entsprechend unterschiedlichen Spannungen versorgen.

Bei einem Anschlußwert von 3 x 400 V und 12.5 A ergibt sich eine Scheinleistungsaufnahme von 5.5 kVA, unter Berücksichtigung eines cosφ von 0,85 somit eine Wirkleistungsaufnahme von 4.7 kW. Bei einer Tagesbetriebszeit von 16h, wie in Kühlanlagen üblich, einem durchschnittlichen Lastfaktor von 0,5 und einem angenommenen Strompreis von 0,20 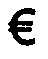 /kWh ergibt sich bei einer nur mit 20% angesetzten Einsparung eine jährliche Ersparnis von etwa 686 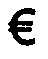 , womit der Mehraufwand an Schaltungselementen, der durch die Erfindung bedingt ist, sehr bald bezahlt ist.

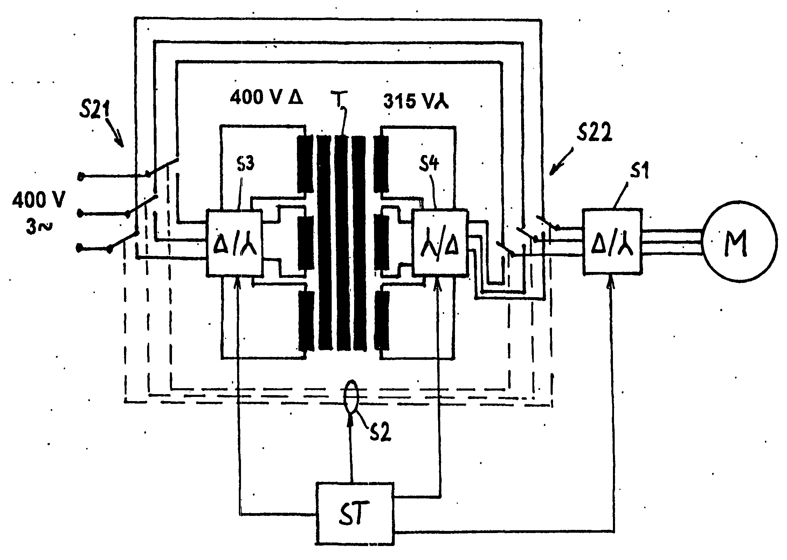

Die Erfindung wird nachfolgend unter Bezugnahme auf ein in der Zeichnung dargestelltes Ausführungsbeispiel näher erläutert.

Die Zeichnung zeigt das Schemaschaltbild der erfindungsgemäßen Stromversorgungsschaltung und eines daran angeschlossenen Drehstrom-Asynchronmotors M. Die Stromversorgungsschaltung enthält als Kernstück einen Drehstromtransformator T, dessen Primärseite im dargestellten Beispiel in Dreieckschaltung für eine Netzspannung von 400 V ausgelegt ist und dessen Sekundärseite in Sternschaltung im dargestellten Beispiel auf 315 V ausgelegt ist, sowie drei Stern/Dreieck-Schalter S1, S3 und S4 sowie einen dreipoligen Umschalter S2 mit zwei Ebenen. Die Anordnung wird von einer Steuereinrichtung ST zur selektiven Betätigung aller vorgenannten Schalter vervollständigt.

Der erste Stern/Dreieck-Schalter S1 ist dem Drehstrommotor M zugeordnet und dient dazu, dessen Wicklungen in bekannter Weise in Stern oder Dreieck miteinander zu verbinden und an die Versorgung anzuschließen. Der dreipolige Umschalter S2 weist zwei miteinander gekoppelte Schalterebenen S21 und S22 auf, von denen die eine (S21) an ihren beweglichen Umschaltkontakten mit dem Stromnetz und die andere (S22) an ihren beweglichen Umschaltkontakten mit dem dem Motor M zugeordneten ersten Stern/Dreieck-Schalter S1 verbunden ist. Die einen feststehenden Kontakte der einen Schalterebene S21 sind mit dem zweiten Stern/Dreieck-Schalter S3 verbunden, und die einen feststehenden Kontakte der anderen Schalterebene S22 sind mit dem dritten Stern/Dreieck-Schalter S4 verbunden. Die anderen feststehenden Kontakte beider Schalterebenen S21 und S22 des Umschalters S2 sind jeweils miteinander verbunden. Wegen Einzelheiten wird auf die Zeichnung verwiesen. Alternativ ist es auch möglich, die zur Schalterebene S22 gehörenden beweglichen Kontakte direkt mit den letztgenannten feststehenden Kontakten der Schalterebene S21 zu verbinden, so daß die Schalterebene S22 als einfacher dreipoliger Ein/Ausschalter ausgeführt werden kann.

Der zweiter Stem/Dreieck-Umschalter S3 ist mit den Primärwicklungen des Transformators T verbunden und daher in der Lage, diese Wicklungen wahlweise in Dreieckschaltung und in Sternschaltung mit dem Stromnetz zu verbinden. Ferner ist der dritte Stern/Dreieck-Schalter S4 mit den Sekundärwicklungen des Transformators T verbunden und daher in der Lage, dessen Wicklungen wahlweise in Sternschaltung und in Dreieckschaltung mit dem motorseitigen, d. h. ersten Stern/Dreieck-Schalter S1 zu verbinden.

Je nach Schalterstellung des dreipoligen Zwei-Ebenen-Umschalters S2 ist der Stern/Dreieck-Umschalter S1 des Motors M entweder direkt mit dem Stromnetz oder mit der Sekundärseite des Transformators T verbunden, dessen Primärseite in letztgenanntem Falle mit dem Stromnetz verbunden ist, ansonsten aber abgeschaltet ist. Der Transformator T ist somit aus der Spannungsversorgung des Motors M vollständig ausgekoppelt, wenn dessen Versorgung direkt aus dem Netz erfolgt.

Mit Hilft der Steuereinrichtung ST ist also der Zwei-Ebenen-Schalter S2 so einstellbar, daß der Motor M direkt mit dem Stromnetz verbunden und gleichzeitig der Transformator T sowohl vom Netz als auch vom Motor M getrennt ist, oder aber die Primärseite des Transformator T über den zweiten Stern/Dreieck-Schalter S3 mit dem Netz und die Sekundärseite des Transformators T über den dritten Stern/Dreieck-Schalter S4 und den ersten Stern/Dreieck-Schalter S1 mit dem Motor M verbunden sind.

Wenn der letztgenannte Schalterzustand eingerichtet ist, besteht vermittels der Steuereinrichtung ST weiterhin die Option, die Primärseite des Transformators T über den Stern/Dreieck-Schalter S3 wahlweise in Dreieckschaltung oder in Sternschaltung mit dem Netz zu verbinden, und in jeder dieser Schaltstellungen des zweiten Stern/Dreieck-Schalters S3 besteht vermittels der Steuereinrichtung ST die Option, die Sekundärseite des Transformators vermittels des dritten Stern/Dreieck-Schalters S4 in Sternschaltung oder in Dreieckschaltung zu schalten und in dieser Konfiguration über den ersten Stern/Dreieck-Schalter S1 mit dem Motor M zu verbinden. Diese verschiedenen Optionen sind in der nachfolgenden Tabelle aufgetragen.

| Option Nr. | Trafo T Primär Y | Trafo T Primär Δ | Trafo T Sekundär Y | Trafo T Sekundär Δ | Motor M Y | Motor M Δ |
|---|---|---|---|---|---|---|
| 1 | - | x | x | - | - | x |
| 2 | - | x | x | - | x | - |
| 3 | - | x | - | x | x | - |
| 4 | - | x | - | x | - | x |
| 5 | x | - | x | - | - | x |
| 6 | x | - | x | - | x | - |
| 7 | x | - | - | x | x | - |
| 8 | x | - | - | x | - | x |
| 9 | Motor am Netz | | | | - | x |
| 10 | Motor am Netz | | | | x | - |

Anmerkung: In den Optionen 1 bis 10 befindet sich der Zwei-Ebenen-Schalter S2 in der den Transformator in die Stromversorgung des Motors M einbeziehenden Stellung, in den Optionen 9 und 10 ist der Transformator T vollkommen spannungslos..

Mit einem geringen Aufwand ist somit eine Vielzahl von Motordrehzahlen erzielbar.

## Patentansprüche

1. Stromversorgungsschaltung für einen mittels einer ersten Schaltereinrichtung (S1) wahlweise in Dreieckschaltung und in Sternschaltung betreibbaren Drehstrom-Asynchrorimotor (M), enthaltend einen Drehstromtransformator (T), dessen Primärseite für die volle Netzspannung in Dreieckschaltung dimensioniert ist und dessen Sekundärseite für eine Spannung in Sternschaltung dimensioniert ist, die etwa in der Mitte zwischen der vollen Netzspannung Phase gegen Phase und der Spannung einer einzelnen Phase derselben liegt, eine zweite Schaltereinrichtung (S2), mit der der Motor (M) wahlweise direkt mit dem Stromnetz bzw. der Sekundärseite des Transformators (T) verbindbar ist, eine dritte Schaltereinrichtung (S3), mit der die Primärseite des Transformators (T) wahlweise in Dreieckschaltung und in Sternschaltung konfigurierbar ist, eine vierte Schaltereinrichtung (S4), mit der die Sekundärseite des Transformators (T) wahlweise in Sternschaltung und in Dreieckschaltung konfigurierbar ist, und eine Steuereinrichtung (ST), die mit den ersten bis vierten Schaltereinrichtungen (S1 bis S4) zur selektiven Betätigung derselben verbunden ist.

## Claims

1. Power supply circuit for a three-phase asynchronous motor (M) operable by means of a first switch means (S1) selectively in delta connection and in star connection, said power supply circuit comprising a three-phase transformer (T) whose primary side is dimensioned for the full mains voltage in delta connection and whose secondary side is dimensioned for a voltage in star connection, which is approximately in the middle between the full mains voltage phase to phase and the voltage of one single phase, a second switch means (S2), by means of which the motor (M) is selectively connectable directly to the mains or to the secondary side of the transformer (T), a third switch means (S3), by means of which the primary side of the transformer (T) can be configured selectively in delta connection and in star connection, a fourth switch means (S4), by means of which the secondary side of the transformer (T) can be configured selectively in star connection and in delta connection, and a control means (ST), which is connected to the first to fourth switch means (S1 to S4) for selectively operating same.

## Revendications

1. Circuit d'alimentation en courant pour un moteur asynchrone triphasé (M) exploitable sélectivement en montage en triangle et en montage en étoile au moyen d'un premier dispositif de commutation (S1), comprenant un transformateur de courant triphasé (T), dont le côté primaire est dimensionné pour la tension de réseau totale en montage en triangle et dont le côté secondaire est dimensionné en montage en étoile pour une tension qui se situe environ à mi-distance entre la tension totale de réseau phase à phase et la tension d'une phase individuelle de ce dernier, un second dispositif de commutation (S2) qui permet de relier sélectivement le moteur (M) directement au réseau de courant ou au côté secondaire du transformateur (T), un troisième dispositif de commutation (S3) qui permet de configurer sélectivement le côté primaire du transformateur (T) en montage en triangle et en montage en étoile, un quatrième dispositif de commutation (S4) qui permet de configurer sélectivement le côté secondaire du transformateur (T) en montage en étoile et en montage en triangle, et un dispositif de commande (ST) qui est relié aux premier à quatrième dispositifs de commutation (S1 à S4) pour l'actionnement sélectif de ces derniers.
